# EUROPEAN PATENT APPLICATION

(11) **EP 4 692 857 A1**
(43) Date of publication of application: **11.02.2026**
(21) Application number: 24780574.0
(22) Date of filing: 27.03.2024
(51) Int. Cl.: G01S 19/46, G01S 11/08

(54) **POSITIONING SYSTEM EMPLOYING GNSS AND DISTANCE**

(30) Priority: 29.03.2023 JP 2023054031
(71) Applicant: The Chugoku Electric Power Co., Inc., Hiroshima-shi, Hiroshima 730-8701 (JP)
(72) Inventor: FUKUHARA Yoji, Hiroshima-shi, Hiroshima 730-8701 (JP); KAMATA Ryosuke, Hiroshima-shi, Hiroshima 730-8701 (JP); TANABE Ryota, Hiroshima-shi, Hiroshima 730-8701 (JP); TAKANO Tomohiro, Hiroshima-shi, Hiroshima 730-8701 (JP); TOYOTA Mitsuo, Hiroshima-shi, Hiroshima 730-8701 (JP); TAKI Yoshihiko, Tokyo 102-0094 (JP)
(74) Representative: Hoffmann Eitle
(86) International application number: PCT/JP2024/012518
(87) International publication number: WO 2024/204473

(57) **Abstract**

An object of the present invention is to provide a novel system.

Provided is a system comprising a mobile wireless device, and a fixed wireless device fixed at a predetermined position, the system comprising a satellite-based position measurer that measures a position of the mobile wireless device by a satellite positioning system; a wireless device distance calculator that calculates a distance between the mobile wireless device and the fixed wireless device on a basis of a propagation time of communication between the mobile wireless device and the fixed wireless device; and a position specifier that specifies the position of the mobile wireless device on a basis of the position measured by the satellite-based position measurer and the distance calculated by the wireless device distance calculator. Also, provided is a system comprising a mobile wireless device, and a fixed wireless device fixed at a predetermined position, the system comprising a satellite distance calculator that calculates a distance between a satellite and the mobile wireless device by a satellite positioning system; a wireless device distance calculator that calculates a distance between the mobile wireless device and the fixed wireless device on a basis of a propagation time of communication between the mobile wireless device and the fixed wireless device; and a position specifier that specifies a position of the mobile wireless device on a basis of the distance calculated by the satellite distance calculator and the distance calculated by the wireless device distance calculator.

## Description

### Technical Field

The present invention relates to a system, a method, and a mobile wireless device.

### Background Art

The position of a worker who works at a high place or the like is measured by a satellite positioning system such as global positioning system (GPS) and real-time kinematic (RTK).

However, it is known that the satellite positioning system does not have high measurement accuracy in the height direction, and the measurement accuracy decreases depending on an environment around a position to be measured.

For example, Patent Literature 1 refers to a method of performing both positioning by a beacon and positioning by a satellite positioning system and selecting a positioning method with higher accuracy in measuring the position of a worker in a substation, in which the measurement accuracy of the satellite positioning system is reduced.

### Citation List

### Patent Literature

Patent Literature 1: JP 2022-181699 A

### Summary of Invention

### Technical Problem

At least one object of the present invention is to provide a novel system.

### Solution to Problem

According to the invention, the above object is achieved by any of the following:
[1] A system comprising a mobile wireless device, and a fixed wireless device fixed at a predetermined position, the system comprising: a satellite-based position measurer that measures a position of the mobile wireless device by a satellite positioning system; a wireless device distance calculator that calculates a distance between the mobile wireless device and the fixed wireless device on a basis of a propagation time of communication between the mobile wireless device and the fixed wireless device; and a position specifier that specifies the position of the mobile wireless device on a basis of the position measured by the satellite-based position measurer and the distance calculated by the wireless device distance calculator;
[2] A system comprising a mobile wireless device, and a fixed wireless device fixed at a predetermined position, the system comprising: a satellite distance calculator that calculates a distance between a satellite and the mobile wireless device by a satellite positioning system; a wireless device distance calculator that calculates a distance between the mobile wireless device and the fixed wireless device on a basis of a propagation time of communication between the mobile wireless device and the fixed wireless device; and a position specifier that specifies a position of the mobile wireless device on a basis of the distance calculated by the satellite distance calculator and the distance calculated by the wireless device distance calculator;
[3] The system according to [1] or [2], wherein the wireless device distance calculator calculates the distance on a basis of a time deviation between an internal clock provided in the mobile wireless device and an internal clock provided in the fixed wireless device;
[4] The system according to any one of [1] to [3], comprising: a time deviation calculator that calculates a time deviation between an internal clock provided in the mobile wireless device and an internal clock provided in the fixed wireless device by transmitting and receiving a signal between the mobile wireless device and the fixed wireless device; and a time deviation corrector that corrects the time deviation between the internal clock provided in the mobile wireless device and the internal clock provided in the fixed wireless device on a basis of the calculated time deviation, wherein the wireless device distance calculator calculates the distance after the time deviation corrector corrects the time deviation;
[5] The system according to [4], comprising: a phase deviation corrector that corrects a phase deviation between the internal clock provided in the mobile wireless device and the internal clock provided in the fixed wireless device by transmitting and receiving a signal between the mobile wireless device and the fixed wireless device; and a phase deviation corrector that corrects the phase deviation between the internal clock provided in the mobile wireless device and the internal clock provided in the fixed wireless device on a basis of the calculated phase deviation, wherein the time deviation calculator calculates the time deviation after the phase deviation corrector corrects the phase deviation;
[6] The system according to any one of [1] to [5], comprising a position outputter that outputs information on the position specified by the position specifier;
[7] The system according to any one of [1] to [6], wherein the fixed wireless device is installed on a steel tower and/or a utility pole;
[8] A method comprising: a satellite-based position measurement step of measuring a position of a mobile wireless device by a satellite positioning system; a wireless device distance calculation step of calculating a distance between the mobile wireless device and a fixed wireless device on a basis of a propagation time of communication between the mobile wireless device and the fixed wireless device; and a position specification step of specifying the position of the mobile wireless device on a basis of the position measured by the satellite-based position measurement step and the distance calculated by the wireless device distance calculation step;
[9] A method comprising: a satellite distance calculation step of calculating a distance between a satellite and a mobile wireless device by a satellite positioning system; a wireless device distance calculation step of calculating a distance between the mobile wireless device and a fixed wireless device on a basis of a propagation time of communication between the mobile wireless device and the fixed wireless device; and a position specification step of specifying a position of the mobile wireless device on a basis of the distance calculated by the satellite distance calculation step and the distance calculated by the wireless device distance calculation step;
[10] A mobile wireless device comprising: a satellite-based position measurer that measures a position of the mobile wireless device by a satellite positioning system; a wireless device distance calculator that calculates a distance between the mobile wireless device and a fixed wireless device on a basis of a propagation time of communication between the mobile wireless device and the fixed wireless device; and a position specifier that specifies the position of the mobile wireless device on a basis of the position measured by the satellite-based position measurer and the distance calculated by the wireless device distance calculator;
[11] A mobile wireless device comprising: a satellite distance calculator that calculates a distance between a satellite and the mobile wireless device by a satellite positioning system; a wireless device distance calculator that calculates a distance between the mobile wireless device and a fixed wireless device on a basis of a propagation time of communication between the mobile wireless device and the fixed wireless device; and a position specifier that specifies a position of the mobile wireless device on a basis of the distance calculated by the satellite distance calculator and the distance calculated by the wireless device distance calculator.

### Advantageous Effects of Invention

According to the present invention, it is possible to provide a novel system.

### Brief Description of Drawings

Fig. 1 is a block diagram illustrating a configuration of a system according to the embodiment of the present invention.
Fig. 2 is a block diagram illustrating a hardware configuration of the mobile wireless device according to the embodiment of the present invention.
Fig. 3 is a block diagram illustrating a hardware configuration of the fixed wireless device according to the embodiment of the present invention.
Fig. 4 is a diagram illustrating a flowchart of position specification processing according to the embodiment of the present invention.
Fig. 5 is a diagram illustrating a flowchart of distance calculation processing according to the embodiment of the present invention.

### Description of Embodiments

Hereinafter, embodiments of the invention will be described. However, the invention is not limited to the following embodiments without departing from the spirit and scope of the invention. The order of the respective processes constituting the flowchart described hereinafter may be changed as long as such a change does not cause contradictions or inconsistencies in the processing contents. Furthermore, as long as it does not cause any contradictions or inconsistencies in the processing contents, some of the processes constituting the flowchart may be omitted, or new processes may be added. Furthermore, an apparatus that primarily executes each process of the flowchart may be changed to another apparatus, provided that such a change does not depart from the spirit of the present invention. In that case, it is also possible to modify the processing contents so as to avoid any contradictions or inconsistencies.

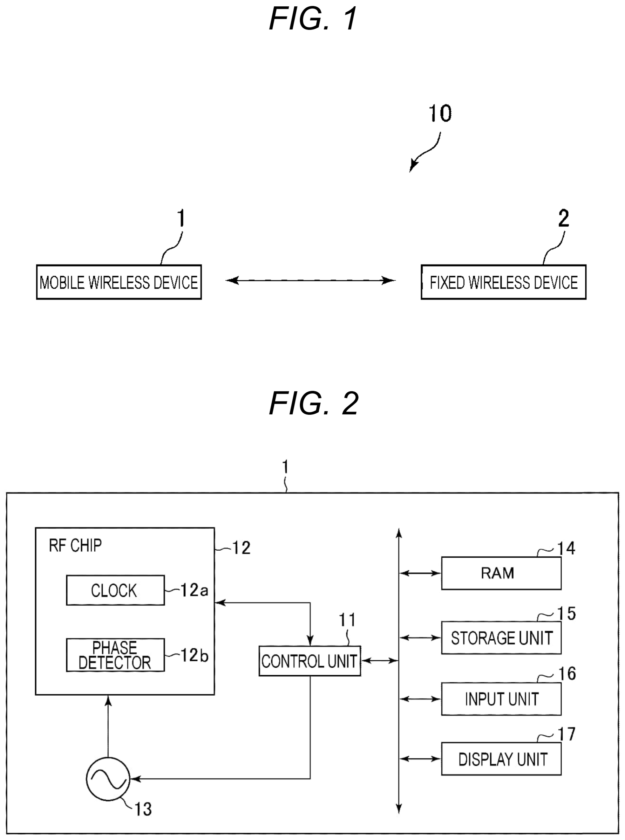

Fig. 1 is a block diagram illustrating a configuration of a system according to the embodiment of the present invention. A system 10 includes a mobile wireless device 1 and a fixed wireless device 2. The mobile wireless device 1 and the fixed wireless device 2 can be connected to each other by wireless communication. Note that the system 10 may include two or more mobile wireless devices 1 and/or two or more fixed wireless devices 2.

The mobile wireless device 1 is a movable wireless device. The mobile wireless device 1 may be movable, for example, by being carried by a worker or installed in a working robot. The mobile wireless device 1 may be a smartphone, a tablet terminal, or the like. The mobile wireless device 1 only needs to include a communication unit for establishing communication connection with the fixed wireless device, a receiver for a satellite positioning system, and a control unit.

The fixed wireless device 2 is a wireless device fixed at a predetermined location. The fixed wireless device 2 may be installed on, for example, a steel tower and/or a utility pole. Information on the position of the fixed wireless device 2 is preferably stored in the system 10 in advance. For example, the information on the position of the fixed wireless device 2 may be stored in a storage unit of the mobile wireless device 1. The information on the position may include information such as latitude, longitude, and altitude.

The fixed wireless device 2 may be installed near the ground or may be installed at a high place. The altitude and the number of fixed wireless devices 2 to be installed can be appropriately designed so as to be able to specify the position of the mobile wireless device 1 as described later.

Fig. 2 is a block diagram illustrating a hardware configuration of the mobile wireless device according to the embodiment of the present invention. The mobile wireless device 1 includes a control unit 11, an RF chip 12, an oscillator 13, a RAM 14, a storage unit 15, an input unit 16, and a display unit 17, which are connected by a bus.

The RF chip 12 includes a clock 12a and a phase detector 12b. The mobile wireless device 1 may include one or more other configurations as necessary, in addition to the control unit 11, the RF chip 12, the oscillator 13, the clock 12a, the phase detector 12b, the RAM 14, the storage unit 15, the input unit 16, and the display unit 17.

The control unit 11 includes a CPU and a ROM. The control unit 11 executes a program stored in the storage unit 15 and controls the mobile wireless device 1. The RAM 14 is a work area of the control unit 11. The storage unit 15 is a memory area for saving programs and data. The control unit 11 executes arithmetic processing on the basis of a program and data read from the RAM 14 and data input by the input unit 16.

The RF chip 12 can transmit and receive data to and from one or more other computer apparatuses. The data received by the RF chip 12 is loaded into the RAM 14, and subjected to arithmetic processing by the control unit 11.

The oscillator 13 oscillates at a predetermined frequency and outputs a signal for giving an operational timing of each unit of the device. As the oscillator 13, for example, a crystal oscillator can be used. The clock 12a clocks the output signal of the oscillator 13 as a vibration source and outputs time. The time clocked by the clock 12a is controlled by the control unit 11 so as to be transmitted to the fixed wireless device 2 via the RF chip 12. The phase detector 12b detects the phase of a carrier wave constituting information received from the fixed wireless device 2, and detects the phase of the signal oscillated by the oscillator 13 of the mobile wireless device 1.

The display unit 17 has a display screen. The control unit 11 outputs a video signal for displaying an image on the display screen according to the result of arithmetic processing. Here, the display screen of the display unit 17 may be a touch panel including a touch sensor. In this case, the touch panel functions as the input unit 16.

Although not illustrated, the mobile wireless device 1 includes a receiver for a satellite positioning system (hereinafter, also referred to as a satellite positioning receiver). The satellite positioning receiver receives a signal from a satellite of a global navigation satellite system (GNSS) such as GPS (hereinafter, also referred to as a GNSS satellite).

The control unit 11 may calculate a distance between the GNSS satellite and the mobile wireless device 1 by multiplying a propagation time of a signal between the GNSS satellite and the mobile wireless device 1 by a propagation speed of the signal, to measure the position of the mobile wireless device 1. The control unit 11 can measure the position of the mobile wireless device 1 by, for example, three-point positioning. In order to measure the position of the mobile wireless device 1, the satellite positioning receiver may receive signals from four or more satellites. The position of the mobile wireless device 1 may be represented by latitude, longitude, altitude, and the like at which the mobile wireless device 1 is located.

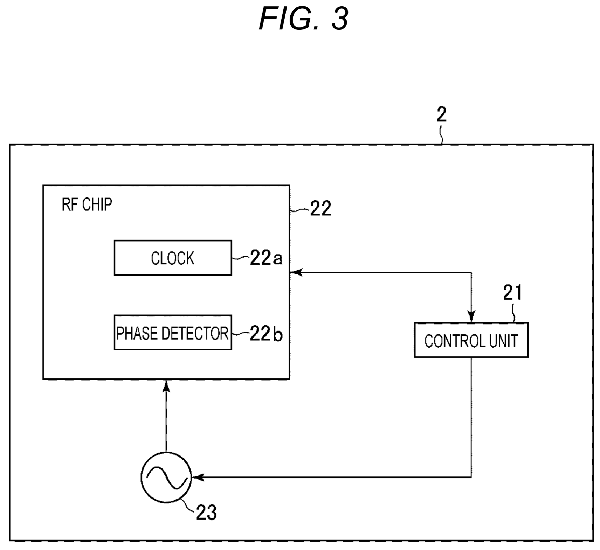

Fig. 3 is a block diagram illustrating a hardware configuration of the fixed wireless device according to the embodiment of the present invention. The fixed wireless device 2 includes a control unit 21, an RF chip 22, and an oscillator 23. The RF chip 22 includes a clock 22a and a phase detector 22b. The fixed wireless device 2 may include an element other than the control unit 21, the RF chip 22, the oscillator 23, the clock 22a, and the phase detector 22b as necessary.

The control unit 21 is not particularly limited, but for example, a microcomputer (microcontroller) can be used. The control unit 21 performs program execution processing based on a program and data. The RF chip 22 executes reception and transmission processing of a radio signal. Data received by the RF chip 22 is subjected to arithmetic processing by the control unit 21.

The oscillator 23 oscillates at a predetermined frequency and outputs a signal for giving an operational timing of each unit of the device. As the oscillator 23, an atomic oscillator or a crystal oscillator can be used. The clock 22a clocks the output signal of the oscillator 23 as a vibration source and outputs time. The time clocked by the clock 22a is controlled by the control unit 21 so as to be transmitted to the mobile wireless device 1 via the RF chip 22. The phase detector 22b detects the phase of a carrier wave constituting information received from the mobile wireless device 1, and detects the phase of the signal oscillated by the oscillator 23 in the fixed wireless device 2.

Hereinafter, the clock 12a provided in the mobile wireless device 1 is also referred to as an internal clock of the mobile wireless device 1. In addition, the clock 22a provided in the fixed wireless device 2 is also referred to as an internal clock of the fixed wireless device 2.

Note that the program may be stored in a recording medium such as a CD-ROM. In this case, the program stored in the recording medium may be installed in the mobile wireless device 1 or the fixed wireless device 2 to execute a predetermined function.

Alternatively, the program may be distributed from a computer apparatus outside the system. In this case, the program distributed from the computer apparatus outside the system may be installed in the mobile wireless device 1 or the fixed wireless device 2 to execute a predetermined function.

Note that the mobile wireless device 1 and/or the fixed wireless device 2 may be connected to one or more other computer apparatuses via a communication network. The other computer apparatus is not particularly limited, and may be a server apparatus, a desktop/notebook personal computer, a tablet terminal, a smartphone, or the like.

Hereinafter, an aspect of specifying the position of the mobile wireless device 1 by the system of the present invention will be described. Here, the mobile wireless device 1 is carried by a worker who works at a high place, and the fixed wireless device 2 is fixed to a steel tower. The mobile wireless device 1 and the fixed wireless device 2 are within a range enabling wireless communication connection with each other. By specifying the position of the mobile wireless device 1, the position of the worker carrying the mobile wireless device 1 can be specified.

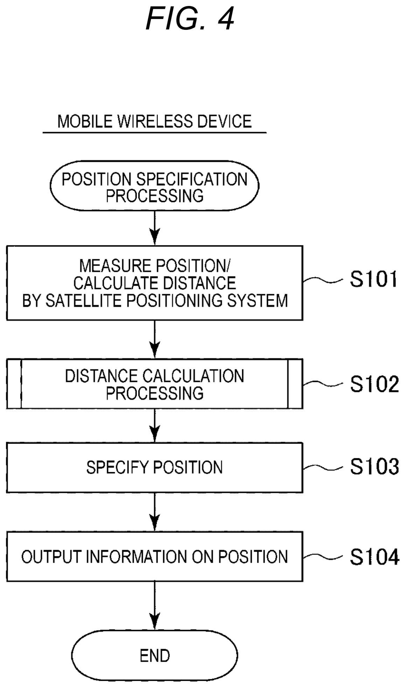

Fig. 4 is a diagram illustrating a flowchart of position specification processing according to the embodiment of the present invention.

First, the mobile wireless device 1 measures the position of the mobile wireless device 1 and/or calculates a distance between the satellite and the mobile wireless device 1 by the satellite positioning system (step S101). In addition, the mobile wireless device 1 calculates a distance between the mobile wireless device 1 and the fixed wireless device 2 by distance calculation processing to be described later (step S102). Next, the mobile wireless device 1 specifies the position of the mobile wireless device 1 on the basis of the position measured in step S101 and/or the distance calculated in step S101 and the distance calculated in step S102 (step S103). The mobile wireless device 1 outputs information on the specified position (step S104), and the position specification processing ends.

The type of the satellite positioning system used in step S101 is not particularly limited, and can be appropriately designed. The satellite positioning system only needs to be able to measure the position of the satellite positioning receiver and/or calculate a distance between the satellite and the satellite positioning receiver by using the satellite. As the satellite positioning system, for example, the GNSS such as GPS, global navigation satellite system (GLONASS), Galileo, and quasi-zenith satellite system (QZSS) can be used.

The positioning method for measuring the position of the satellite positioning receiver by the satellite positioning system may be independent positioning using one satellite positioning receiver or relative positioning using a plurality of satellite positioning receivers. The relative positioning may be differential positioning, or interference positioning such as real-time kinematic (RTK) positioning, static positioning, and kinematic positioning.

In a case where the position of the mobile wireless device 1 is measured by the independent positioning, for example, distances between the satellite positioning receiver provided in the mobile wireless device 1 and four or more GNSS satellites may be calculated, and the position of the mobile wireless device 1 may be measured by the three-point positioning on the basis of the calculated distances.

In a case where the position of the mobile wireless device 1 is measured by RTK positioning which is the relative positioning, a satellite positioning receiver serving as a reference station may be installed at a predetermined location whose position is known, and the satellite positioning receiver provided in the mobile wireless device 1 may be used as a mobile station. Then, each of the satellite positioning receiver serving as a reference station and the satellite positioning receiver serving as a mobile station may receive signals from four or more GNSS satellites to calculate a distance between each satellite positioning receiver and each GNSS satellite. In addition, the position of the mobile station, that is, the position of the mobile wireless device 1 may be measured on the basis of information on the distance between each satellite positioning receiver and each GNSS satellite and the position of the reference station known in advance.

The position of the mobile wireless device 1 may be represented by, for example, latitude, longitude, and/or altitude.

From the viewpoint of high positioning accuracy, it is preferable to measure the position of the mobile wireless device 1 by RTK positioning.

The distance calculation processing in step S102 will be described later. In step S102, it is sufficient that the distance between the mobile wireless device 1 and the fixed wireless device 2 can be calculated on the basis of a propagation time of communication between the mobile wireless device 1 and the fixed wireless device 2.

The method of specifying the position of the mobile wireless device 1 in step S103 is not particularly limited, and can be appropriately designed. In step S103, it is sufficient that the position of the mobile wireless device 1 can be specified on the basis of the position of the mobile wireless device 1 measured in step S101 and/or the distance between the satellite and the mobile wireless device 1 calculated in step S101, and the distance between the mobile wireless device 1 and the fixed wireless device 2 calculated in step S102.

In general, it is said that positioning by the satellite positioning system has lower altitude accuracy as compared with latitude and longitude accuracy. Therefore, in step S103, among the positions measured in step S101, the latitude and longitude may be specified as measured, and the altitude may be specified on the basis of the distance between the mobile wireless device 1 and the fixed wireless device 2 calculated in step S102. In this case, the altitude of an intersection point between a straight line passing through the latitude and longitude measured in step S101 and parallel to the direction of gravity and a sphere centered on the fixed wireless device 2 and having the distance between the mobile wireless device 1 and the fixed wireless device 2 as a radius may be specified as the altitude of the mobile wireless device 1.

Alternatively, in a case where there are two intersection points between the straight line passing through the latitude and longitude measured in step S101 and parallel to the direction of gravity and the sphere centered on the fixed wireless device 2 and having the distance between the mobile wireless device 1 and the fixed wireless device 2 as a radius, the altitude of an intersection point closer to the altitude measured in step S101 between the two intersection points may be specified as the altitude of the mobile wireless device 1. Alternatively, in a case where the altitude of any one of the two intersection points is below the ground surface, the altitude of an intersection point whose altitude is higher than the ground surface may be specified as the altitude of the mobile wireless device 1. In a case where there is an error in the latitude and/or longitude measured in step S101 and/or the distance between the mobile wireless device 1 and the fixed wireless device 2 calculated in step S102, there is a possibility that there are two intersection points.

In addition, when the number of data regarding the distance between the GNSS satellite and the satellite positioning receiver is insufficient by a part of signals from the GNSS satellite blocked by an obstruction such as a steel tower, it is known that the accuracy of positioning by the satellite positioning system is reduced. Therefore, the position of the mobile wireless device 1 may be specified by the three-point positioning on the basis of the distance between the satellite and the mobile wireless device 1 calculated in step S101 and the distance between the mobile wireless device 1 and the fixed wireless device 2 calculated in step S102.

In the above description, the example of the method of specifying the position of the mobile wireless device 1 in the system including one fixed wireless device 2 has been described. However, in a case where the system includes two or more fixed wireless devices 2, two or more pieces of data regarding the distance between the mobile wireless device 1 and the fixed wireless device 2 can be acquired. Therefore, the position of the mobile wireless device 1 may be specified by a method different from the above method.

For example, among the positions measured in step S101, the latitude and longitude may be specified as measured, and the altitude may be specified on the basis of the two or more pieces of data regarding the distance between the mobile wireless device 1 and the fixed wireless device 2 calculated in step S102. In this case, the altitude of an intersection point between a straight line passing through the latitude and longitude measured in step S101 and parallel to the direction of gravity and two or more spheres centered on the respective fixed wireless devices 2 and having the respective distances between the mobile wireless device 1 and the fixed wireless devices 2 as radii may be specified as the altitude of the mobile wireless device 1.

The specified position of the mobile wireless device 1 may be represented by, for example, latitude, longitude, and/or altitude.

A time at which the position of the mobile wireless device 1 is measured in step S101 and/or a time at which the distance between the satellite and the mobile wireless device 1 is calculated in step S101, and a time at which the distance between the mobile wireless device 1 and the fixed wireless device 2 is calculated in step S102, which are used for the specification in step S103, are preferably the same time or nearby times. Here, the nearby times are not particularly limited, but are preferably times within a predetermined time range from the same time. By performing the specification in step S103 using the data acquired at the same time or the nearby times, the position at this time can be specified more accurately.

In step S104, the method of outputting the information on the specified position is not particularly limited, and can be appropriately designed. In step S104, for example, the specified position of the mobile wireless device 1 may be displayed on the display screen of the mobile wireless device 1 in a graspable manner. At this time, the specified position of the mobile wireless device 1 may be represented by information of an x coordinate, a y coordinate, and/or a z coordinate in a three-dimensional space. The x coordinate, y coordinate, and/or z coordinate of the mobile wireless device 1 may be specified on the basis of the latitude, longitude, and/or altitude of the mobile wireless device 1.

In addition, on the display screen of the mobile wireless device 1, information on a region considered to be dangerous in high-place work may be displayed together with the information on the specified position of the mobile wireless device 1. Since the information on a region considered to be dangerous is displayed together with the information on the specified position of the mobile wireless device 1, the worker can be careful not to enter the region considered to be dangerous.

Furthermore, in a case where the specified position is within a predetermined range from the region considered to be dangerous, the mobile wireless device 1 may output a notification. The method of outputting a notification is not particularly limited, and can be appropriately designed. For example, the notification may be displayed on the display screen of the mobile wireless device 1, or the notification may be output by voice from a speaker of the mobile wireless device 1. By outputting the notification when the specified position is within a predetermined range from the region considered to be dangerous, it is possible to notify the worker approaching the region considered to be dangerous of the danger.

In addition, on the display screen of the mobile wireless device 1, information on the moving direction of the mobile wireless device 1 may be displayed together with the information on the specified position of the mobile wireless device 1. The information on the moving direction of the mobile wireless device 1 can be represented by, for example, a vector in a three-dimensional space. In addition, the moving direction of the mobile wireless device 1 may be specified by a temporal change in the specified position of the mobile wireless device 1. Since the information on the moving direction of the mobile wireless device 1 is displayed together with the information on the specified position of the mobile wireless device 1, the worker can easily grasp information on his/her own movement.

As described above, the system includes: the mobile wireless device; and the fixed wireless device fixed at a predetermined position, the system including: a satellite-based position measurer configured to measure a position of the mobile wireless device by the satellite positioning system; a wireless device distance calculator configured to calculate a distance between the mobile wireless device and the fixed wireless device on the basis of a propagation time of communication between the mobile wireless device and the fixed wireless device; and a position specifier configured to specify the position of the mobile wireless device on the basis of the position measured by the satellite-based position measurer and the distance calculated by the wireless device distance calculator. As a result, the new system can be provided.

As described above, the system includes: the mobile wireless device; and the fixed wireless device fixed at a predetermined position, the system including: a satellite distance calculator configured to calculate a distance between the satellite and the mobile wireless device by the satellite positioning system; a wireless device distance calculator configured to calculate a distance between the mobile wireless device and the fixed wireless device on the basis of a propagation time of communication between the mobile wireless device and the fixed wireless device; and a position specifier configured to specify a position of the mobile wireless device on the basis of the distance calculated by the satellite distance calculator and the distance calculated by the wireless device distance calculator. As a result, the new system can be provided.

By using the distance between the mobile wireless device 1 and the fixed wireless device 2 together with the satellite positioning system, the position of the mobile wireless device 1 can be specified more accurately than the positioning by the satellite positioning system.

In addition, as described above, the system includes a position outputter configured to output information on the position specified by the position specifier. As a result, the specified position can be easily grasped.

In addition, as described above, the fixed wireless device is installed on a steel tower and/or a utility pole. As a result, the position can be accurately specified around a tall artificial structure such as a steel tower and/or a utility pole.

Next, the distance calculation processing in step S102 will be described. The mobile wireless device 1 can calculate the distance between the mobile wireless device 1 and the fixed wireless device 2 by transmitting and receiving a signal to and from the fixed wireless device 2. The distance calculation processing may be performed, for example, every 1/240 seconds, every 1/120 seconds, or every 1/60 seconds. As described above, it is preferable that the timing of measuring the position of the mobile wireless device 1 and/or the timing of calculating the distance between the satellite and the mobile wireless device 1 in step S101, and the timing of calculating the distance between the mobile wireless device 1 and the fixed wireless device 2 in step S102 are synchronized with each other.

The distance between the mobile wireless device 1 and the fixed wireless device 2 is calculated on the basis of the propagation time of communication between the mobile wireless device 1 and the fixed wireless device 2. For example, the distance between the mobile wireless device 1 and the fixed wireless device 2 can be calculated by multiplying the propagation time of communication between the mobile wireless device 1 and the fixed wireless device 2 by a propagation speed of the communication.

The propagation time of the communication between the mobile wireless device 1 and the fixed wireless device 2, that is, the propagation time of a signal can be calculated by transmitting and receiving a signal between the mobile wireless device 1 and the fixed wireless device 2 and obtaining a difference between a transmission time of the signal and a reception time of the signal. The transmission time of the signal and the reception time of the signal are clocked by the internal clock provided in the mobile wireless device 1 and the internal clock provided in the fixed wireless device 2. Therefore, the smaller a time deviation between the internal clock provided in the mobile wireless device 1 and the internal clock provided in the fixed wireless device 2, the more accurately the propagation time can be calculated.

In addition, there may be a deviation between the phase of the internal clock provided in the mobile wireless device 1, that is, the phase of a signal oscillated by the oscillator 13 in the mobile wireless device 1, and the phase of the internal clock provided in the fixed wireless device 2, that is, the phase of a signal oscillated by the oscillator 23 in the fixed wireless device 2. Hereinafter, the phase of the internal clock provided in the mobile wireless device 1 is also referred to as a phase of the mobile wireless device 1. In addition, the phase of the internal clock provided in the fixed wireless device 2 is also referred to as a phase of the fixed wireless device 2. Furthermore, the phase deviation between the internal clock provided in the mobile wireless device 1 and the internal clock provided in the fixed wireless device 2 is also referred to as a phase deviation between the fixed wireless device 2 and the mobile wireless device 1.

Note that the phase of the signal oscillated by the oscillator 13 in the mobile wireless device 1 is considered to be substantially equal to the phase of a carrier wave constituting information transmitted by the mobile wireless device 1. In addition, the phase of the signal oscillated by the oscillator 23 in the fixed wireless device 2 is considered to be substantially equal to the phase of a carrier wave constituting information transmitted by the fixed wireless device 2.

Hereinafter, an example of calculating the distance between the mobile wireless device 1 and the fixed wireless device 2 after correcting the phase deviation between the internal clock provided in the mobile wireless device 1 and the internal clock provided in the fixed wireless device 2 and correcting the time deviation between the internal clock provided in the mobile wireless device 1 and the internal clock provided in the fixed wireless device 2 will be described.

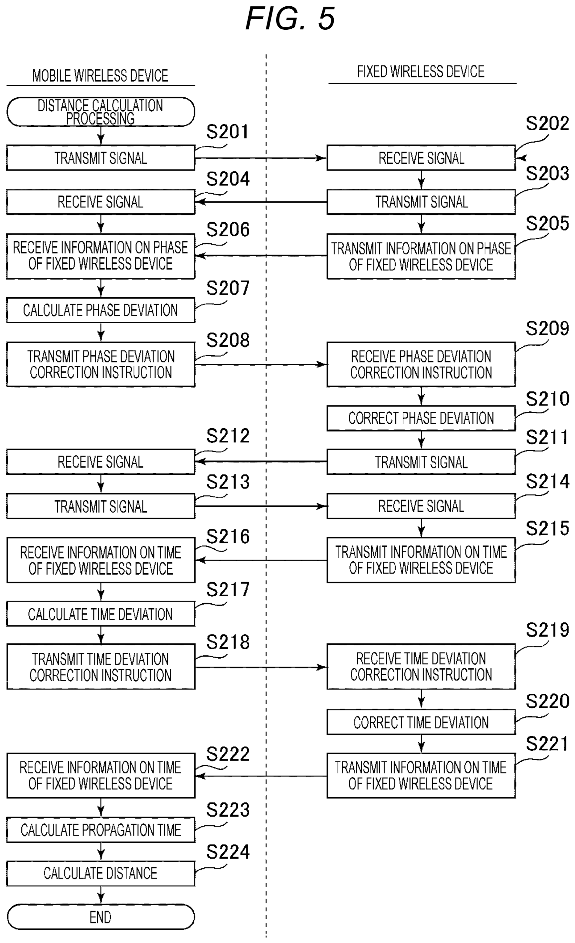

Fig. 5 is a diagram illustrating a flowchart of distance calculation processing according to the embodiment of the present invention.

First, the mobile wireless device 1 transmits a signal to the fixed wireless device 2 (step S201). Then, the fixed wireless device 2 receives the transmitted signal (step S202). Next, the fixed wireless device 2 transmits a signal to the mobile wireless device 1 (step S203). Then, the mobile wireless device 1 receives the transmitted signal (step S204).

After step S203 is performed, the fixed wireless device 2 transmits information on the phase of the fixed wireless device 2 to the mobile wireless device 1 (step S205). Then, the mobile wireless device 1 receives the transmitted phase information (step S206). The mobile wireless device 1 calculates the phase deviation between the fixed wireless device 2 and the mobile wireless device 1 (step S207). Next, the mobile wireless device 1 transmits an instruction to correct the phase deviation (hereinafter also referred to as a phase deviation correction instruction) of the fixed wireless device 2 to the fixed wireless device 2 (step S208). The fixed wireless device 2 receives the transmitted phase deviation correction instruction (step S209). Then, the fixed wireless device 2 corrects the phase deviation of the fixed wireless device 2 (step S210).

The signal in step S201 may include a signal transmission request for requesting the mobile wireless device 1 that has transmitted the signal to transmit a signal.

In addition, when the mobile wireless device 1 transmits the signal in step S201, the mobile wireless device 1 may measure a phase when the signal is transmitted and store the phase in the storage unit 15 of the mobile wireless device 1. The phase when the signal is transmitted may be the phase of a carrier wave constituting the transmitted signal.

Furthermore, when the fixed wireless device 2 receives the signal in step S202, the fixed wireless device 2 may measure a phase when the signal is received and store the phase in the memory in the control unit 21 of the fixed wireless device 2. The phase when the signal is received may be the phase of a signal oscillated by the oscillator 23 of the fixed wireless device 2 when the signal is received.

In addition, when the fixed wireless device 2 transmits the signal in step S203, the fixed wireless device 2 may measure a phase when the signal is transmitted and store the phase in the memory in the control unit 21 of the fixed wireless device 2. The phase when the signal is transmitted may be the phase of a carrier wave constituting the transmitted signal.

Furthermore, when the mobile wireless device 1 receives the signal in step S204, the mobile wireless device 1 may measure a phase when the signal is received and store the phase in the storage unit 15 of the mobile wireless device 1. The phase when the signal is received may be the phase of a signal oscillated by the oscillator 13 of the mobile wireless device 1 when the signal is received.

The information on the phase of the fixed wireless device 2 transmitted to the mobile wireless device 1 in step S205 may include information on the phase when the fixed wireless device 2 receives the signal in step S202 and information on the phase when the fixed wireless device 2 transmits the signal in step S203.

In step S207, the phase deviation can be calculated on the basis of a phase difference between the phase of the carrier wave constituting the signal transmitted from the mobile wireless device 1 to the fixed wireless device 2 and the phase of the signal oscillated by the oscillator 23 of the fixed wireless device 2 when the signal is received by the fixed wireless device 2, and a phase difference between the phase of the carrier wave constituting the signal transmitted from the fixed wireless device 2 to the mobile wireless device 1 and the phase of the signal oscillated by the oscillator 13 of the mobile wireless device 1 when the signal is received by the mobile wireless device 1.

The phase of the carrier wave constituting the signal transmitted from the mobile wireless device 1 to the fixed wireless device 2 is the phase of the signal transmitted in step S201. The phase of the signal oscillated by the oscillator 23 of the fixed wireless device 2 when the signal is received by the fixed wireless device 2 is the phase of the signal received in step S202. The phase of the carrier wave constituting the signal transmitted from the fixed wireless device 2 to the mobile wireless device 1 is the phase of the signal transmitted in step S203. The phase of the signal oscillated by the oscillator 13 of the mobile wireless device 1 when the signal is received by the mobile wireless device 1 is the phase of the signal received in step S204.

A phase difference ΔΦ_{P} generated by the signal propagating between the mobile wireless device 1 and the fixed wireless device 2 can be calculated from the arithmetic mean of a phase difference ΔΦ_{M} and a phase difference ΔΦ_{F}, by defining: as ΔΦ_{M}, the phase difference between the phase of the carrier wave constituting the signal transmitted from the mobile wireless device 1 to the fixed wireless device 2 and the phase of the signal oscillated by the oscillator 23 of the fixed wireless device 2 when the signal is received by the fixed wireless device 2; and as ΔΦ_{F}, the phase difference between the phase of the carrier wave constituting the signal transmitted from the fixed wireless device 2 to the mobile wireless device 1 and the phase of the signal oscillated by the oscillator 13 of the mobile wireless device 1 when the signal is received by the mobile wireless device 1. That is, the phase difference ΔΦ_{P} can be calculated by Equation (1): ΔΦ_{P} = 1/2 × (ΔΦ_{M} + ΔΦ_{F}).

When the phase deviation between the mobile wireless device 1 and the fixed wireless device 2 is defined as ΔΦ_{C}, the relationship expressed by Equation (2): ΔΦ_{F} = ΔΦ_{P} + (-ΔΦ_{C}) is established, so that the phase deviation ΔΦ_{C} can be calculated by subtracting the phase difference ΔΦ_{F} from the phase difference ΔΦ_{P}. That is, the phase difference ΔΦ_{C} can be calculated by Equation (3): ΔΦ_{C} = 1/2 × (ΔΦ_{M} - ΔΦ_{F}). In step S207, the phase deviation between the mobile wireless device 1 and the fixed wireless device 2 may be calculated using Equation (3).

Here, the phase deviation ΔΦ_{C} is calculated by Equation (3), but in some cases, the phase deviation ΔΦ_{C} to be calculated may be obtained by further subtracting 2π or 4π, that is, 2nπ. n may take zero or a positive integer. Therefore, it is also possible to specify whether n is zero, or an integer such as 1 or 2 (that is, whether the value obtained by further subtracting 2nπ from the phase difference ΔΦ_{C} obtained by Equation (3) is the original phase deviation or whether the value not subtracted is the original phase deviation) on the basis of a propagation time to be described later or a time deviation between the mobile wireless device 1 and the fixed wireless device 2.

There may be a case in which the signal transmitted from the mobile wireless device 1 to the fixed wireless device 2 and the signal transmitted from the fixed wireless device 2 to the mobile wireless device 1 start with an output that is not zero but is an arbitrary value at the start of transmission. In such a case, it is necessary to correct the phase deviation ΔΦ_{C} by measuring the phase at the start of transmission and the transmission time. Meanwhile, by configuring such that the phase at the start of transmission is always constant and transmission is performed at a predetermined time, it is possible to omit such a processing of correcting ΔΦ_{C} after measuring the phase at the start of transmission and the transmission time.

The phase deviation correction instruction in step S208 may be an instruction to correct the phase of the fixed wireless device 2 so as to be synchronized with the phase of the mobile wireless device 1.

**In** step S210, the fixed wireless device 2 may correct the phase of the fixed wireless device 2 so as to be synchronized with the phase of the mobile wireless device 1 on the basis of the calculated phase deviation ΔΦ_{C}. That is, the fixed wireless device 2 may correct the phase of the signal generated by the oscillator 23 of the fixed wireless device 2 so as to be synchronized with the signal generated by the oscillator 13 of the mobile wireless device 1 on the basis of the calculated phase deviation ΔΦ_{C}. The correction of the phase in step S210 is controlled and executed by the control unit 21 of the fixed wireless device 2.

In this manner, the phase of the fixed wireless device 2 is corrected so as to match the phase of the mobile wireless device 1, and therefore the frequencies of the clock 22a of the fixed wireless device 2 and the clock 12a of the mobile wireless device 1 are also adjusted. That is, the phase is locked. When the phase lock is established, the clock 22a of the fixed wireless device 2 and the clock 12a of the mobile wireless device 1 clock time at the same frequency. Here, an example of calculating and correcting the time deviation between the fixed wireless device 2 and the mobile wireless device 1 in a state where the phase lock is established will be described. While the phase lock continues, a time difference between the clock 22a of the fixed wireless device 2 and the clock 12a of the mobile wireless device 1 does not change, so that it is possible to accurately compare the times.

After the phase deviation of the fixed wireless device 2 is corrected in step S210, the fixed wireless device 2 transmits a signal to the mobile wireless device 1 (step S211). Then, the mobile wireless device 1 receives the transmitted signal (step S212). Next, the mobile wireless device 1 transmits a signal to the fixed wireless device 2 (step S213). Then, the fixed wireless device 2 receives the transmitted signal (step S214).

Next, the fixed wireless device 2 transmits information on the time of the fixed wireless device 2 to the mobile wireless device 1 (step S215). Then, the mobile wireless device 1 receives the transmitted time information (step S216). The mobile wireless device 1 calculates the time deviation between the mobile wireless device 1 and the fixed wireless device 2 (step S217). Next, the mobile wireless device 1 transmits an instruction to correct the time deviation (hereinafter also referred to as a time deviation correction instruction) of the fixed wireless device 2 to the fixed wireless device 2 (step S218). The fixed wireless device 2 receives the transmitted time deviation correction instruction (step S219). Then, the fixed wireless device 2 corrects the time deviation of the fixed wireless device 2 (step S220).

The signal in step S211 may include a signal transmission request for requesting the fixed wireless device 2 that has transmitted the signal to transmit a signal.

In addition, when the fixed wireless device 2 transmits the signal in step S211, the fixed wireless device 2 may clock a time at which the signal is transmitted and store the time in the memory in the control unit 21 of the fixed wireless device 2.

Furthermore, when the mobile wireless device 1 receives the signal in step S212, the mobile wireless device 1 may clock a time at which the signal is received and store the time in the storage unit 15 of the mobile wireless device 1.

In addition, when the mobile wireless device 1 transmits the signal in step S213, the mobile wireless device 1 may clock a time at which the signal is transmitted and store the time in the storage unit 15 of the mobile wireless device 1.

Furthermore, when the fixed wireless device 2 receives the signal in step S214, the fixed wireless device 2 may clock a time at which the signal is received and store the time in the memory in the control unit 21 of the fixed wireless device 2.

The information on the time of the fixed wireless device 2 transmitted to the mobile wireless device 1 in step S215 may include information on the time at which the fixed wireless device 2 transmits the signal in step S211 and information on the time at which the fixed wireless device 2 receives the signal in step S214.

In step S217, the time deviation can be calculated on the basis of the time at which the fixed wireless device 2 transmits the signal to the mobile wireless device 1, the time at which the mobile wireless device 1 receives the signal, the time at which the mobile wireless device 1 transmits the signal to the fixed wireless device 2, and the time at which the fixed wireless device 2 receives the signal.

The time at which the fixed wireless device 2 transmits the signal to the mobile wireless device 1 is the time at which the signal is transmitted in step S211. The time at which the mobile wireless device 1 receives the signal is the time at which the signal is received in step S212. The time at which the mobile wireless device 1 transmits the signal to the fixed wireless device 2 is the time at which the signal is transmitted in step S213. The time at which the fixed wireless device 2 receives the signal is the time at which the signal is received in step S214.

A time deviation T_{L} between the mobile wireless device 1 and the fixed wireless device 2 can be calculated by Equation (4): T_{L} = 1/2 × ((T_{MF} - T_{M}) - (T_{FM} - T_{F})), by defining: as T_{M}, the time at which the fixed wireless device 2 transmits the signal to the mobile wireless device 1; as T_{MF}, the time at which the mobile wireless device 1 receives the signal; as T_{F}, the time at which the mobile wireless device 1 transmits the signal to the fixed wireless device 2; and as T_{FM}, the time at which the fixed wireless device 2 receives the signal. In step S217, the time deviation T_{L} between the mobile wireless device 1 and the fixed wireless device 2 may be calculated by Equation (4).

The time deviation correction instruction in step S218 may be an instruction to correct the time of the fixed wireless device 2 so as to be synchronized with the time of the mobile wireless device 1.

In step S220, the fixed wireless device 2 may correct the time of the fixed wireless device 2 so as to be synchronized with the time of the mobile wireless device 1 on the basis of the calculated time deviation T_{L}.

After the time deviation of the fixed wireless device 2 is corrected in step S220, the fixed wireless device 2 transmits information on the time of the fixed wireless device 2 to the mobile wireless device 1 (step S221). Then, the mobile wireless device 1 receives the transmitted time information (step S222). Next, the mobile wireless device 1 calculates the propagation time of communication between the mobile wireless device 1 and the fixed wireless device 2 (step S223). Then, the mobile wireless device 1 calculates the distance between the mobile wireless device 1 and the fixed wireless device 2 (step S224), and the distance calculation processing ends.

The information on the time of the fixed wireless device 2 in step S221 may include information on a time at which the fixed wireless device 2 transmits the information.

In step S223, the mobile wireless device 1 can calculate the propagation time of communication between the fixed wireless device 2 and the mobile wireless device 1 from a difference between a time at which the fixed wireless device 2 transmits the information in step S221 and a time at which the mobile wireless device 1 receives the information in step S222.

In step S224, the mobile wireless device 1 can calculate the distance between the fixed wireless device 2 and the mobile wireless device 1 by multiplying the propagation time calculated in step S223 by the propagation speed of the communication (for example, the speed of light).

As described above, the system includes: a time deviation calculator configured to calculate a time deviation between the internal clock provided in the mobile wireless device and the internal clock provided in the fixed wireless device by transmitting and receiving a signal between the mobile wireless device and the fixed wireless device; and a time deviation corrector configured to correct a time deviation between the internal clock provided in the mobile wireless device and the internal clock provided in the fixed wireless device on the basis of the calculated time deviation, wherein a distance calculator, the distance between the wireless devices, calculates a distance after the time deviation corrector corrects the time deviation. As a result, the distance between the mobile wireless device and the fixed wireless device can be accurately calculated.

In addition, as described above, the system includes: a phase deviation corrector configured to correct a phase deviation between the internal clock provided in the mobile wireless device and the internal clock provided in the fixed wireless device by transmitting and receiving a signal between the mobile wireless device and the fixed wireless device; and a phase deviation corrector configured to correct a phase deviation between the internal clock provided in the mobile wireless device and the internal clock provided in the fixed wireless device on the basis of the calculated phase deviation, wherein the time deviation calculator calculates the time deviation after the phase deviation corrector corrects the phase deviation. As a result, the distance between the mobile wireless device and the fixed wireless device can be calculated more accurately.

In the above description, an aspect has been described in which the mobile wireless device 1 calculates the phase deviation, gives the phase deviation correction instruction, calculates the time deviation, gives the time deviation correction instruction, calculates the propagation time, and calculates the distance. However, the calculation of the phase deviation, the phase deviation correction instruction, the calculation of the time deviation, the time deviation correction instruction, the calculation of the propagation time, and/or the calculation of the distance may be executed by the fixed wireless device 2, and/or other computer apparatus. In this case, the information necessary for each processing may be transmitted to the apparatus that executes each processing.

For example, the fixed wireless device 2 may calculate the distance between the fixed wireless device 2 and the mobile wireless device 1.

Note that the method of calculating the phase deviation and the time deviation between the fixed wireless device 2 and the mobile wireless device 1 can be appropriately designed regardless of the above description. That is, the number of times of transmission and reception of signals between the fixed wireless device 2 and the mobile wireless device 1 and the content of information transmitted and received between the fixed wireless device 2 and the mobile wireless device 1 are not particularly limited. It is sufficient that the phase deviation and the time deviation between the fixed wireless device 2 and the mobile wireless device 1 can be calculated.

In addition, in the above description, an aspect has been described in which the distance is calculated after correcting the phase deviation and the time deviation between the fixed wireless device 2 and the mobile wireless device 1, but the distance may be calculated without correcting the phase deviation and/or the time deviation between the fixed wireless device 2 and the mobile wireless device 1.

For example, the distance may be calculated by correcting the time deviation between the fixed wireless device 2 and the mobile wireless device 1 without correcting the phase deviation between the fixed wireless device 2 and the mobile wireless device 1. In this case, steps S201 to S210 may not be performed.

Alternatively, for example, the distance may be calculated without correcting the phase deviation and the time deviation between the fixed wireless device 2 and the mobile wireless device 1. Specifically, for example, after correcting the phase deviation and the time deviation between the fixed wireless device 2 and the mobile wireless device 1, the distance may be calculated without correcting the phase deviation and the time deviation again within a predetermined time. Alternatively, for example, the distance may be calculated on the basis of the propagation time of a case where the phase deviation and the time deviation are theoretically corrected without actually correcting the phase deviation and the time deviation between the fixed wireless device 2 and the mobile wireless device 1.

A time deviation in a common clock is said to be less than one second per day. Therefore, within a predetermined time after correcting the phase deviation and the time deviation between the fixed wireless device 2 and the mobile wireless device 1, the phase and time of the internal clock provided in the fixed wireless device 2 and the phase and time of the internal clock provided in the mobile wireless device 1 are considered to have almost no deviation.

Therefore, within a predetermined time after correcting the phase deviation and the time deviation between the fixed wireless device 2 and the mobile wireless device 1, the propagation time when the phase deviation and the time deviation are corrected can be calculated by steps S221 to S223 without correcting the phase deviation and the time deviation again by steps S201 to S220.

The predetermined time may be 1 minute, 5 minutes, 10 minutes, 20 minutes, or 30 minutes.

In addition, the distance may be calculated by calculating the propagation time of a case where the phase deviation and the time deviation are theoretically corrected on the basis of the calculated phase deviation and time deviation without actually correcting the phase deviation and the time deviation between the fixed wireless device 2 and the mobile wireless device 1. In this case, by clocking and storing the time at which the signal is transmitted and/or received in steps S201 to S204 and transmitting the information on the time with the information on the phase in step S205, steps S208 to S216 and steps S218 to S222 can be omitted.

That is, as long as the distance between the fixed wireless device 2 and the mobile wireless device 1 is calculated on the basis of the time deviation between the internal clock provided in the fixed wireless device 2 and the internal clock provided in the mobile wireless device 1, the phase deviation and the time deviation between the fixed wireless device 2 and the mobile wireless device 1 may or may not be corrected.

In addition, in the above description, an example has been described in which the distance between the fixed wireless device 2 and the mobile wireless device 1 is calculated by calculating the propagation time of the communication between the fixed wireless device 2 and the mobile wireless device 1, and multiplying the calculated propagation time by the propagation speed of the communication. However, the aspect of calculating the distance between the fixed wireless device 2 and the mobile wireless device 1 is not limited to this example.

For example, a signal may be transmitted and received between the fixed wireless device 2 and the mobile wireless device 1 without calculating the propagation time of the communication between the fixed wireless device 2 and the mobile wireless device 1, and the distance between the fixed wireless device 2 and the mobile wireless device 1 may be calculated from the transmission time of the signal, the reception time of the signal, and the propagation speed of the signal. In this case, the distance between the fixed wireless device 2 and the mobile wireless device 1 may be calculated in step S224 on the basis of the transmission time of the information in step S221, the reception time of the information in step S222, and the propagation speed of the information without performing step S223.

That is, the distance between the fixed wireless device 2 and the mobile wireless device 1 only needs to be calculated on the basis of the propagation time based on the time deviation between the internal clock provided in the fixed wireless device 2 and the internal clock provided in the mobile wireless device 1.

As described above, the wireless device distance calculator calculates the distance on the basis of a time deviation between the internal clock provided in the mobile wireless device and the internal clock provided in the fixed wireless device. As a result, the distance between the mobile wireless device and the fixed wireless device can be accurately calculated.

Furthermore, in the above description, an example has been described in which correction is performed so that the phase and time of the internal clock provided the fixed wireless device 2 are synchronized with the phase and time of the internal clock provided in the mobile wireless device 1. However, the aspect of correcting the phase deviation and the time deviation is not limited to this example. It is sufficient that the phase deviation and the time deviation between the internal clock provided in the fixed wireless device 2 and the internal clock provided in the mobile wireless device 1 are corrected. For example, correction may be performed so that the phase and time of the internal clock provided in the mobile wireless device 1 are synchronized with the phase and time of the internal clock provided in the fixed wireless device 2, or both the internal clock provided in the mobile wireless device 1 and the internal clock provided in the fixed wireless device 2 may be corrected so as to be synchronized with each other.

In a case where the system 10 includes a plurality of the mobile wireless devices 1 and/or a plurality of the fixed wireless devices 2, it is preferable that the internal clocks of the plurality of mobile wireless devices 1 and/or the plurality of fixed wireless devices 2 provided in the system 10 are corrected so as to be synchronized.

In the above description, an example in which the mobile wireless device 1 includes the satellite positioning receiver, that is, an example in which the mobile wireless device 1 and the satellite positioning receiver are integrally formed has been described. However, the mobile wireless device 1 and the satellite positioning receiver may be formed separately. In a case where the mobile wireless device 1 and the satellite positioning receiver are formed separately, it is preferable that the mobile wireless device 1 and the satellite positioning receiver are provided at positions close to each other. When the mobile wireless device 1 and the satellite positioning receiver are close to each other, the position of a worker or the like carrying the mobile wireless device 1 and the satellite positioning receiver can be accurately measured.

### Reference Signs List

- 1: Mobile wireless device
- 2: Fixed wireless device
- 10: System
- 11: Control unit
- 12: RF chip
- 12a: Clock
- 12b: Phase detector
- 13: Oscillator
- 14: RAM
- 15: Storage unit
- 16: Input unit
- 17: Display unit
- 21: Control unit
- 22: RF chip
- 22a: Clock
- 22b: Phase detector
- 23: Oscillator

## Claims

1. A system comprising a mobile wireless device, and a fixed wireless device fixed at a predetermined position, the system comprising:
a satellite-based position measurer that measures a position of the mobile wireless device by a satellite positioning system;
a wireless device distance calculator that calculates a distance between the mobile wireless device and the fixed wireless device on a basis of a propagation time of communication between the mobile wireless device and the fixed wireless device; and
a position specifier that specifies the position of the mobile wireless device on a basis of the position measured by the satellite-based position measurer and the distance calculated by the wireless device distance calculator.

2. A system comprising a mobile wireless device, and a fixed wireless device fixed at a predetermined position, the system comprising:
a satellite distance calculator that calculates a distance between a satellite and the mobile wireless device by a satellite positioning system;
a wireless device distance calculator that calculates a distance between the mobile wireless device and the fixed wireless device on a basis of a propagation time of communication between the mobile wireless device and the fixed wireless device; and
a position specifier that specifies a position of the mobile wireless device on a basis of the distance calculated by the satellite distance calculator and the distance calculated by the wireless device distance calculator.

3. The system according to claim 1 or 2,
wherein the wireless device distance calculator calculates the distance on a basis of a time deviation between an internal clock provided in the mobile wireless device and an internal clock provided in the fixed wireless device.

4. The system according to claim 1 or 2, comprising:
a time deviation calculator that calculates a time deviation between an internal clock provided in the mobile wireless device and an internal clock provided in the fixed wireless device by transmitting and receiving a signal between the mobile wireless device and the fixed wireless device; and
a time deviation corrector that corrects the time deviation between the internal clock provided in the mobile wireless device and the internal clock provided in the fixed wireless device on a basis of the calculated time deviation,
wherein the wireless device distance calculator calculates the distance after the time deviation corrector corrects the time deviation.

5. The system according to claim 4, comprising:
a phase deviation corrector that corrects a phase deviation between the internal clock provided in the mobile wireless device and the internal clock provided in the fixed wireless device by transmitting and receiving a signal between the mobile wireless device and the fixed wireless device; and
a phase deviation corrector that corrects the phase deviation between the internal clock provided in the mobile wireless device and the internal clock provided in the fixed wireless device on a basis of the calculated phase deviation,
wherein the time deviation calculator calculates the time deviation after the phase deviation corrector corrects the phase deviation.

6. The system according to claim 1 or 2, comprising
a position outputter that outputs information on the position specified by the position specifier.

7. The system according to claim 1 or 2,
wherein the fixed wireless device is installed on a steel tower and/or a utility pole.

8. A method comprising:
a satellite-based position measurement step of measuring a position of a mobile wireless device by a satellite positioning system;
a wireless device distance calculation step of calculating a distance between the mobile wireless device and a fixed wireless device on a basis of a propagation time of communication between the mobile wireless device and the fixed wireless device; and
a position specification step of specifying the position of the mobile wireless device on a basis of the position measured by the satellite-based position measurement step and the distance calculated by the wireless device distance calculation step.

9. A method comprising:
a satellite distance calculation step of calculating a distance between a satellite and a mobile wireless device by a satellite positioning system;
a wireless device distance calculation step of calculating a distance between the mobile wireless device and a fixed wireless device on a basis of a propagation time of communication between the mobile wireless device and the fixed wireless device; and
a position specification step of specifying a position of the mobile wireless device on a basis of the distance calculated by the satellite distance calculation step and the distance calculated by the wireless device distance calculation step.

10. A mobile wireless device comprising:
a satellite-based position measurer that measures a position of the mobile wireless device by a satellite positioning system;
a wireless device distance calculator that calculates a distance between the mobile wireless device and a fixed wireless device on a basis of a propagation time of communication between the mobile wireless device and the fixed wireless device; and
a position specifier that specifies the position of the mobile wireless device on a basis of the position measured by the satellite-based position measurer and the distance calculated by the wireless device distance calculator.

11. A mobile wireless device comprising:
a satellite distance calculator that calculates a distance between a satellite and the mobile wireless device by a satellite positioning system;
a wireless device distance calculator that calculates a distance between the mobile wireless device and a fixed wireless device on a basis of a propagation time of communication between the mobile wireless device and the fixed wireless device; and
a position specifier that specifies a position of the mobile wireless device on a basis of the distance calculated by the satellite distance calculator and the distance calculated by the wireless device distance calculator.
